# FASCICULE DE BREVET EUROPEEN

(11) **EP 1 494 060 B1**
(45) Date de publication et mention de la délivrance du brevet: **17.01.2007**
(21) Numéro de dépôt: 04291636.1
(22) Date de dépôt: 29.06.2004
(51) Int. Cl.: G02B 23/26

(54) **Dispositif de recherche et de détection de défauts de pieces par endoscopie**
Anordnung zum Suchen und Erfassen von Fehlern in Teilen durch Endoskopie
Apparatus for searching and detecting flaws in parts by endoscopy

(30) Priorité: 04.07.2003 FR 0308156
(43) Date de publication de la demande: 05.01.2005
(73) Titulaire: SNECMA, 75015 Paris (FR); SNECMA SERVICES, 75015 Paris (FR)
(72) Inventeur: Bonningue, Isabelle, 91450 Soisy Sur Seine (FR); Le Quellec, John, 77000 Vaux Le Penil (FR); Lemoal, Jean-Claude, 77850 La Brosse Hericy (FR); Baccella, Michel, 91700 Villiers Sur Orge (FR)
(74) Mandataire: Ramey, Daniel

(56) Documents cités:
- US-A- 3 456 641
- US-A- 4 273 110
- US-A- 4 628 207
- US-A- 4 784 135
- US-B1- 6 400 980

## Description

L'invention concerne un dispositif de recherche et de détection par endoscopie de défauts de pièces sensiblement inaccessibles se trouvant derrière une paroi.

Il est déjà connu d'inspecter les composants internes d'un matériel ou d'une machine à l'aide d'un endoscope qui est un instrument optique allongé de faible diamètre que l'on fait passer par un petit orifice d'une paroi pour examiner l'aspect des composants se trouvant de l'autre côté de la paroi. On peut ainsi notamment procéder à l'inspection des aubes d'une turbomachine telle qu'un turboréacteur ou un turbopropulseur d'avion, sans démontage de la turbomachine.

Toutefois, la capacité de détection des défauts est limitée par la résolution du système optique de l'endoscope, par l'éclairage, par l'orientation de l'endoscope par rapport à la surface observée et par la nature des défauts, entre autres.

Il est connu par ailleurs de rechercher des défauts sur des composants de machines en utilisant une technique de ressuage, qui consiste à déposer des produits organiques sur la surface examinée d'un composant et à observer le résultat en éclairage ultraviolet. On peut ainsi détecter des discontinuités de surface telles que des criques ou fissures de très faibles dimensions, invisibles en éclairage normal, en déposant sur le composant un produit fluorescent qui pénètre dans les discontinuités de surface, puis en lavant et en étuvant ou en séchant la surface correspondante du composant, et en déposant ensuite un produit révélateur qui met en évidence le produit fluorescent infiltré dans les discontinuités de surface. On éclaire alors le composant par un rayonnement ultraviolet qui excite le produit fluorescent, ce dernier émettant en réponse un rayonnement sur une autre longueur d'onde, par exemple de couleur verte dans le spectre visible.

Cette technique de ressuage nécessite en général de démonter plus ou moins complètement la machine examinée.

On a déjà proposé, dans le document US-A-4 273 110, de combiner les techniques d'endoscopie et de ressuage dans un même instrument qui comprend, dans un fourreau cylindrique allongé de faible diamètre, un tube de quartz pour la transmission de lumière ultraviolette et de lumière visible vers une extrémité de l'instrument voisine du composant à examiner, un conduit optique contenant des lentilles pour l'observation d'une zone éclairée du composant, et trois conduits pour l'amenée et la pulvérisation de produits de ressuage sur le composant à examiner. Un filtre optique arrêtant la lumière visible est monté de façon amovible à l'autre extrémité de l'instrument entre le tube de quartz et une source lumineuse émettant dans le visible et dans l'ultraviolet, pour permettre un éclairage du composant alternativement en lumière visible et en ultraviolet. Le diamètre extérieur du fourreau de l'instrument est suffisamment faible pour permettre son passage par un orifice endoscopique ayant un diamètre de l'ordre de 9 millimètres.

Cet instrument connu présente quelques inconvénients :

L'éclairage du composant en lumière ultraviolette est à sortie axiale pour éviter l'utilisation de miroirs de renvoi qui sont trop pénalisants en termes d'encombrement et d'absorption lumineuse. Les sorties des conduits de pulvérisation sont nécessairement axiales, comme les sorties de l'éclairage et des moyens d'observation, ce qui limite fortement l'utilisation de l'instrument. De plus, la section du conduit optique d'observation est très faible, ce conduit devant laisser dans le fourreau un espace suffisant pour le montage du tube de quartz et des conduits d'amenée et de pulvérisation des produits de ressuage, de sorte que, quand l'instrument est utilisé en éclairage ultraviolet, il ne peut capter qu'une faible partie de la lumière émise par les produits de ressuage et ne permet pas une observation fiable.

L'invention a notamment pour but d'apporter une solution simple, satisfaisante et peu coûteuse à ce problème.

Elle a pour objet un dispositif qui combine les techniques d'endoscopie et de ressuage tout en évitant les inconvénients des moyens connus.

Elle propose à cet effet un dispositif de recherche et de détection de défauts par ressuage et endoscopie, ce dispositif comprenant une canne cylindrique tubulaire rigide de faible diamètre, des conduits logés dans la canne pour l'amenée d'air et de produits de ressuage sur une partie de pièce à examiner, et des moyens de guidage de lumière et de transmission d'images logés dans la canne pour l'éclairage et l'observation de la partie de pièce à examiner, caractérisé en ce que les moyens de guidage de lumière et de transmission d'images sont constitués par un premier endoscope à lumière visible monté axialement dans la canne et entouré par les conduits de produits de ressuage, cet endoscope comprenant un tube rectiligne rigide dans lequel sont montés en parallèle des moyens de guidage de lumière visible et des moyens de transmission d'images, et en ce que le dispositif comprend un second endoscope à lumière ultraviolette, indépendant du premier endoscope et de la canne précitée pour l'observation des pièces traitées par les produits de ressuage.

Dans le dispositif selon l'invention, c'est un endoscope à lumière visible qui est logé avec les conduits de produits de ressuage dans la canne cylindrique et qui sert uniquement à l'observation en lumière visible de la partie de pièce sur laquelle on pulvérise les produits de ressuage. Les effets de ces produits sont observés ensuite au moyen du second endoscope, dont les performances optiques ne sont pas limitées par une réduction de section transversale due à la présence de conduits d'amenée de produits de ressuage dans un tube ayant des dimensions suffisamment petites pour autoriser son passage par un orifice endoscopique.

L'éclairage en lumière visible de la partie de pièce à traiter est suffisant pour bien contrôler le dépôt des produits de ressuage, et l'éclairage en lumière ultraviolette de cette partie de pièce au moyen du second endoscope permet de bien observer les effets des produits de ressuage et assure donc une détection optimale des défauts des pièces examinées.

Selon une autre caractéristique de l'invention, les moyens de guidage de lumière du premier endoscope comprennent un câble de fibres optiques s'étendant d'une extrémité à l'autre du tube, ce câble ayant une extrémité coudée de sortie orientée en oblique par rapport à l'axe du tube et destinée à être amenée au voisinage d'une partie de pièce à examiner.

La sortie de l'éclairage n'est donc pas axiale, mais par exemple perpendiculaire à l'axe du tube, et la rotation de la canne autour de son axe, combinée avec une translation axiale de cette canne permet d'éclairer et d'observer de grandes surfaces de pièces.

Les moyens de transmission d'images du premier endoscope comprennent un ensemble rectiligne de composants optiques, comportant un objectif de formation d'image et des lentilles de transfert d'image, cet ensemble s'étendant d'une extrémité à l'autre du tube et comportant également des moyens optiques de renvoi, montés à l'extrémité de cet ensemble sur l'axe optique de celui-ci et orientés en oblique par rapport à cet axe optique.

Ces moyens optiques de renvoi et l'extrémité coudée de sortie du câble d'éclairage sont voisins et orientés de façon correspondante pour éclairer et observer une même partie de pièce.

De préférence, les moyens optiques de renvoi sont formés par un prisme.

La face réfléchissante de ce prisme est orientée avantageusement à 45 degrés sur l'axe optique des moyens de transmission d'images et l'extrémité coudée du câble d'éclairage s'étend perpendiculairement à l'axe du tube.

Les conduits qui sont logés dans la canne autour du premier endoscope comprennent un conduit d'air, un conduit de poudre et un conduit de liquide, qui s'étendent d'une extrémité à l'autre de la canne, et qui comportent une première extrémité destinée à être reliée à des moyens d'alimentation. Les secondes extrémités des conduits de poudre et de liquide débouchent à l'extrémité correspondante de la canne dans la même direction que les moyens d'éclairage et les moyens de transmission d'images du premier endoscope tandis que la seconde extrémité du conduit d'air débouche axialement à l'extrémité de la canne pour protéger le premier endoscope et éviter le dépôt de poudre et de liquide à son extrémité.

Dans un mode de réalisation particulier de l'invention, le tube du premier endoscope a un diamètre de l'ordre de 4 millimètres et la canne a un diamètre de l'ordre de 8 millimètres.

Le second endoscope d'éclairage en lumière ultraviolette peut avoir un diamètre extérieur sensiblement égal à celui de la canne précitée, ce qui assure de bonnes performances d'éclairage en lumière ultraviolette et d'observation des défauts de pièce.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique du dispositif selon l'invention pour l'éclairage en lumière visible et le dépôt de produits de ressuage sur une pièce à examiner ;
- la figure 2 est une vue schématique du second endoscope pour l'éclairage en lumière ultraviolette de la pièce examinée ;
- les figures 3 et 4 sont des vues schématiques en plan de la canne d'éclairage en lumière visible et de dépôt de produits de ressuage ;
- la figure 5 est une vue schématique en coupe axiale de l'endoscope à lumière visible utilisé dans cette canne.

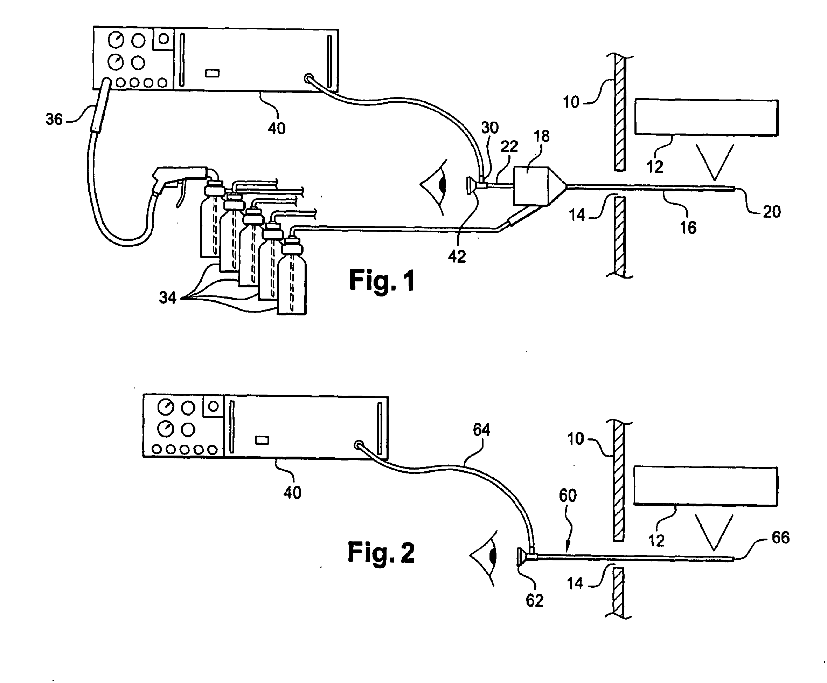

En figure 1, la référence 10 désigne une paroi telle qu'un carter de turbomachine derrière laquelle se trouvent des pièces 12 à examiner, telles que des aubes de rotor de la turbomachine.

La paroi 10 comprend un orifice endoscopique 14 de faible dimension (typiquement ayant un diamètre de 9 millimètres), par lequel on peut introduire une canne 16 d'éclairage en lumière visible et de pulvérisation de produits de ressuage, dont une extrémité est munie d'un bloc 18 de connexion à des moyens d'alimentation en produits de ressuage et en air comprimé, et dont l'autre extrémité 20 est destinée à être amenée en regard d'une surface de la pièce 12 à examiner.

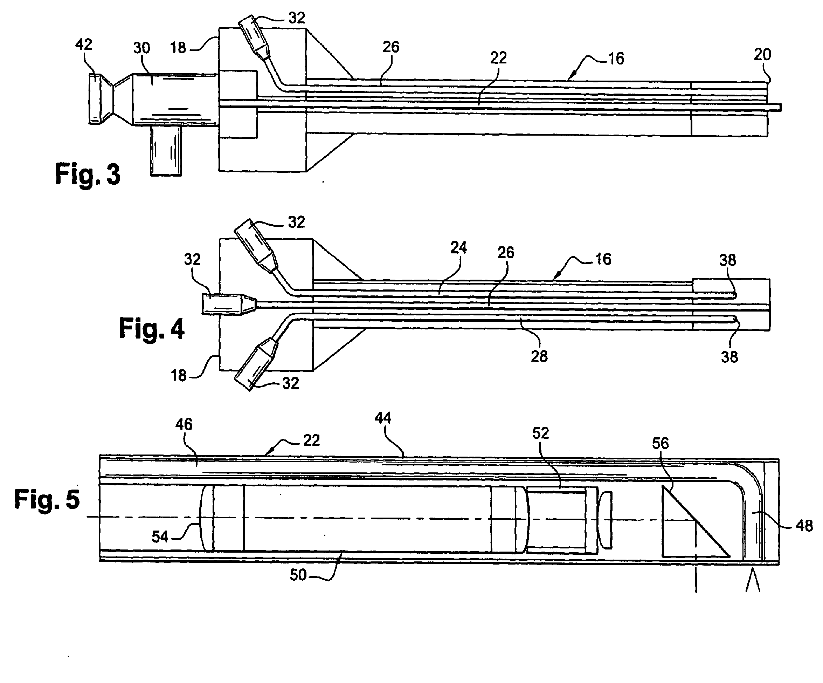

La canne 16 est représentée plus en détail aux figures 3 et 4. Cette canne est cylindrique tubulaire rigide, par exemple métallique, et contient un premier endoscope 22 d'éclairage et d'observation en lumière visible, un conduit 24 d'amenée et de pulvérisation d'une poudre sur la surface de la pièce 12 à examiner, un conduit 26 d'amenée d'air comprimé et un conduit 28 d'amenée et de pulvérisation d'un liquide qui peut être successivement de l'acétone, un pénétrant, un émulsifiant et de l'eau. Le premier endoscope 22 et les conduits 24, 26, 28 s'étendent longitudinalement dans la canne 16 d'une extrémité à l'autre de celle-ci, l'endoscope étant disposé sur l'axe de la canne 16 et les conduits 24, 26 et 28 étant autour de l'endoscope.

Comme représenté schématiquement aux figures 1 et 3, le premier endoscope 22 comprend une première extrémité 30 de connexion à une source de lumière visible et une seconde extrémité qui sera décrite plus en détail ultérieurement et qui débouche à l'extrémité 20 de la canne 16.

Les conduits 24, 28 d'amenée des produits de ressuage ont des premières extrémités 32 de connexion à des réservoirs 34 contenant les produits de ressuage, eux-mêmes reliés à une alimentation 36 en air comprimé, et des secondes extrémités 38 qui débouchent à l'extrémité 20 de la canne 16 perpendiculairement à l'axe de cette canne.

De préférence, les moyens d'alimentation en air comprimé et les sources de lumière visible et ultraviolette sont regroupés dans un module d'alimentation 40 comportant lui-même des moyens d'alimentation en énergie électrique et en air comprimé.

L'extrémité 30 du premier endoscope 22 comporte un oculaire 42 pour une vision directe par un observateur de la surface de la pièce 12 examinée qui se trouve en regard de l'extrémité 20 de la canne.

L'endoscope 22 est représenté plus en détail en figure 5 et comprend essentiellement un tube cylindrique rigide 44, par exemple métallique, dans lequel sont disposés un câble 46 de fibres optiques pour le guidage de la lumière visible d'une extrémité à l'autre de l'endoscope, ce câble 46 ayant une première extrémité destinée à être reliée à la source de lumière visible prévue dans le module d'alimentation 40 et une seconde extrémité 48 de sortie de lumière, qui s'étend par exemple perpendiculairement à l'axe du tube 44 à l'extrémité de l'endoscope opposée à celle équipée de l'oculaire 42. Des moyens de transmission d'images 50 sont également disposés à l'intérieur du tube 44 et s'étendent longitudinalement d'une extrémité à l'autre dans celui-ci, ces moyens 50 de transmission d'images étant constitués par un ensemble rectiligne de composants optiques comprenant notamment un objectif 52 de formation d'image et une ou des lentilles de transfert 54. Des moyens de renvoi 56 sont placés dans le tube 44 au voisinage de l'objectif 52, entre cet objectif et la seconde extrémité 48 des moyens 46 de guidage de lumière, les moyens optiques de renvoi 56 étant formés d'un prisme qui est disposé sur l'axe optique des moyens de transmission d'images 50 et qui a une face réfléchissante inclinée à 45 degrés par exemple sur cet axe, pour l'observation dans une direction perpendiculaire audit axe optique et parallèle à la direction dans laquelle s'étend l'extrémité 48 du guide de lumière 46.

Comme on le voit bien en figure 5, le guide de lumière 46 s'étend le long de la paroi du tube 44 et les moyens 50 de transmission d'images occupent la quasi-totalité du reste du tube, ce qui permet d'utiliser une section aussi grande que possible pour les moyens de transmission d'images 50 aux fins d'une meilleure observation.

Dans un mode particulier de l'invention, donné ici à titre d'exemple, le tube rigide 44 a un diamètre extérieur de 4 millimètres environ et une longueur d'environ 40 centimètres. Il est destiné à une visée à 90 degrés de son axe et a un champ d'observation de 55 degrés.

Le dispositif selon l'invention comprend un second endoscope 60, représenté schématiquement en figure 2, qui est indépendant de la canne 16 et du premier endoscope 22 et qui est destiné à être introduit par l'orifice endoscopique 14 de la paroi 10 pour observer la surface de la pièce 12 qui a été traitée par les produits de ressuage.

Cet endoscope 60 comporte une première extrémité munie d'un oculaire 62 et d'un moyen 64 de connexion à une source de lumière ultraviolette faisant partie du module d'alimentation 40, et une seconde extrémité 66 à sortie lumineuse perpendiculaire à l'axe de l'endoscope pour l'éclairage en lumière ultraviolette et l'observation de la surface traitée de la pièce 12.

Cet endoscope 60 peut être d'un type classique ou de préférence du type décrit dans une autre demande de brevet de la demanderesse. Comme cet endoscope 60 est utilisé seul, il peut avoir des dimensions transversales plus importantes que s'il était utilisé avec ou à la place du premier endoscope 22 dans la canne 16, ce qui de façon générale permet un meilleur éclairage en ultraviolet de la surface de la pièce 12 et une meilleure observation des résultats de ressuage.

Le dispositif selon l'invention est utilisé de la façon suivante :

Dans un premier temps, la canne 16 est introduite par l'orifice 14 de la paroi 10 et son extrémité 20 est déplacée, par translation axiale et par rotation autour de l'axe, en regard de la surface d'une pièce 12 à examiner.

Pour vérifier si un défaut apparent de la pièce 12 est ou non un défaut réel telle qu'une crique ou une fissure, des produits de ressuage sont successivement pulvérisés sur la partie correspondante de la pièce 12, ces produits comprenant un produit fluorescent liquide qui va pénétrer dans les discontinuités de surface, un liquide de lavage et une poudre formant révélateur, grâce à laquelle on met en évidence la présence du produit pénétrant infiltré dans une discontinuité de surface même de très faibles dimensions.

L'examen de la pièce 12 et l'observation de la pulvérisation des produits de ressuage sur cette pièce sont effectués en lumière visible, la surface de la pièce 12 étant éclairée par le flux lumineux sortant de l'extrémité coudée 48 du guide de lumière 46 du premier endoscope, cette lumière étant réfléchie et/ou rétrodiffusée par la surface de la pièce et reprise par le miroir 56 qui la renvoie dans l'axe des moyens 50 de transmission d'images vers l'oculaire 42 monté à l'autre extrémité du premier endoscope.

La canne 16 est ensuite retirée de l'orifice endoscopique 14 puis le second endoscope 60 connecté à la source de lumière ultraviolette du module d'alimentation 40 est introduit à son tour par l'orifice 14 et son extrémité 66 est amenée en regard de la surface traitée de la pièce 12. L'éclairage en lumière ultraviolette de la surface traitée de la pièce 12 provoque une excitation du produit pénétrant infiltré dans une discontinuité de surface et qui a diffusé dans le révélateur, le produit pénétrant émettant en réponse à cette excitation une fluorescence par exemple de couleur verte, bien visible dans l'obscurité et que l'utilisateur peut observer au moyen de l'oculaire 62.

De façon générale, la séparation de l'éclairage en lumière ultraviolette et de l'éclairage en lumière visible dans le dispositif selon l'invention permet d'améliorer les performances de ces deux éclairages et de l'observation des résultats correspondants.

## Revendications

1. Dispositif de recherche et de détection de défauts sur des pièces par ressuage et endoscopie, ce dispositif comprenant une canne cylindrique tubulaire rigide (16) de faible diamètre, des conduits (24, 28) logés dans la canne (16) pour l'amenée d'air et de produits de ressuage sur une partie de pièce (12) à examiner et des moyens de guidage de lumière et de transmission d'images logés dans la canne (16) pour l'éclairage et l'observation de la partie de pièce à examiner, **caractérisé en ce que** les moyens de guidage de lumière et de transmission d'images sont constitués par un premier endoscope (22) à lumière visible monté axialement dans la canne (16) et entouré par des conduits (24,26,28) de produits de ressuage et d'air, cet endoscope (22) comprenant un tube rectiligne (44) dans lequel sont montés en parallèle des moyens (46) de guidage de lumière visible et des moyens (50) de transmission d'images, et **en ce que** le dispositif comprend un second endoscope (60) à lumière ultraviolette, indépendant du premier endoscope et de la canne (16) précitée pour l'observation des parties de pièce traitées par les produits de ressuage.

2. Dispositif selon la revendication 1, **caractérisé en ce que** les moyens (46) de guidage de lumière du premier endoscope comprennent un câble de fibres optiques s'étendant d'une extrémité à l'autre du tube (44).

3. Dispositif selon la revendication 2, **caractérisé en ce que** le câble (46) de fibres optiques comprend une extrémité de sortie coudée (48) orientée en oblique par rapport à l'axe du tube et destinée à être amenée au voisinage d'une partie de pièce (12) à éclairer en lumière visible.

4. Dispositif selon l'une des revendications 1 à 3, **caractérisé en ce que** les moyens de transmission d'images comprennent un ensemble rectiligne de composants optiques comportant un objectif (52) de formation d'image et des lentilles (54) de transfert d'image et s'étendant sensiblement d'une extrémité à l'autre du tube (44).

5. Dispositif selon l'une des revendications 1 à 4, **caractérisé en ce que** les moyens (50) de transmission d'images du premier endoscope comprennent également des moyens optiques de renvoi (56) montés à l'extrémité du tube (44) sur l'axe optique des moyens (50) de transmission d'images et orientés en oblique par rapport à cet axe optique.

6. Dispositif selon l'ensemble des revendications 3 et 5, **caractérisé en ce que** les moyens optiques de renvoi (56) et l'extrémité coudée de sortie du câble (46) de fibres optiques sont voisins et orientés de façon à éclairer et observer respectivement une même partie de pièce.

7. Dispositif selon la revendication 6, **caractérisé en ce que** les moyens optiques de renvoi (56) sont situés entre l'extrémité de l'ensemble rectiligne de composants optiques et l'extrémité coudée (48) de sortie du câble (46) de fibres optiques.

8. Dispositif selon l'une des revendications 5 à 7, **caractérisé en ce que** les moyens optiques de renvoi (56) sont formés par un prisme.

9. Dispositif selon l'une des revendications 5 à 8, **caractérisé en ce que** les moyens optiques de renvoi (56) ont une surface réfléchissante orientée à 45 degrés sur l'axe optique des moyens (50) de transmission d'images et l'extrémité coudée (48) de sortie du câble 46 s'étend perpendiculairement à l'axe du tube 44.

10. Dispositif selon l'une des revendications 2 à 9, **caractérisé en ce que** le câble de fibres optiques (46) s'étend le long de la paroi du tube (44) et les moyens (50) de transmission d'images occupent sensiblement le reste du tube.

11. Dispositif selon l'une des revendications précédentes, **caractérisé en ce que** les conduits logés dans la canne (16) autour du premier endoscope (22) comprennent un conduit d'air (26), un conduit de poudre (24) et un conduit de liquide (28), qui s'étendent d'une extrémité à l'autre de ladite canne et qui ont une première extrémité destinée à être reliée à des moyens (40) d'alimentation , les conduits (24, 28) de poudre et de liquide ayant une autre extrémité débouchant à l'extérieur de la canne (16) dans la même direction que les moyens d'éclairage et les moyens de transmission d'images, et le conduit d'air (26) ayant une autre extrémité débouchant axialement à l'extrémité de la canne (16) pour générer une circulation d'air protégeant l'extrémité du premier endoscope (22).

12. Dispositif selon l'une des revendications précédentes, **caractérisé en ce que** le tube (44) du premier endoscope (22) a un diamètre de l'ordre de 4 millimètres et la canne (16) précitée un diamètre de l'ordre de 8 millimètres.

13. Dispositif selon l'une des revendications précédentes, **caractérisé en ce que** le second endoscope (60) à lumière ultraviolette a un diamètre extérieur sensiblement égal à celui de la canne (16) précitée.

## Claims

1. Apparatus for searching for and detecting defects on parts by penetration testing and endoscopy, the apparatus comprising a rigid tubular cylindrical rod (16) of small diameter, pipes (24, 28) received in the rod (16) for feeding air and penetration test substances on a portion of the part (12) under examination, and light guide and image transmission means received in the rod (16) to illuminate and observe said portion of the part under examination, **characterized in that** the light guide and image transmission means are constituted by a first endoscope (22) that operates with visible light mounted axially in the rod (16) and surrounded by pipes (24, 26, 28) for air and penetration test substances, said endoscope (22) having a rectilinear tube (44) in which the visible light guide means (46) and the image transmission means (50) are mounted in parallel, and **in that** the apparatus further comprises a second endoscope (60) that operates with ultraviolet light, independent of the first endoscope and of the above-mentioned rod (16) for observing the portions of the part that has been treated by the penetration test substances.

2. Apparatus according to claim 1, **characterized in that** the light guide means (46) of the first endoscope comprise an optical fiber cable extending from one end to the other of the tube (44).

3. Apparatus according to claim 2, **characterized in that** the optical fiber cable (46) has a bent outlet end (48) oriented obliquely relative to the axis of the tube and designed to be brought into the vicinity of a portion of the part (12) that is to be illuminated in visible light.

4. Apparatus according to any one of claims 1 to 3, **characterized in that** the image transmission means comprise a rectilinear step of optical components comprising an image-forming objective lens (52) and image-transferring lenses (54) extending substantially from one end to the other of the tube (44).

5. Apparatus according to any one of claims 1 to 4, **characterized in that** the image transmission means (50) of the first endoscope also comprise optical reflector means (56) mounted at the end of the tube (44) on the optical axis of the image transmission means (50) and oriented obliquely relative to said optical axis.

6. Apparatus according to claims 3 and 5 taken together, **characterized in that** the optical reflector means (56) and the bent outlet end of the optical fiber cable (46) are adjacent and are oriented so as to illuminate and observe respectively the same portion of the part.

7. Apparatus according to claim 6, wherein the optical reflector means (56) are situated between the end of the rectilinear set of optical components and the bent outlet end (48) of the optical fiber cable (46).

8. Apparatus according to any one of claims 5 to 7, **characterized in that** the optical reflector means (56) are formed by a prism.

9. Apparatus according to any one of claims 5 to 8, **characterized in that** the optical reflector means (56) have a reflecting surface oriented at 45° relative to the optical axis of the image transmission means (50) and the bent outlet end (48) of the cable (46) extends perpendicularly to the axis of the tube (44).

10. Apparatus according to any one of claims 2 to 9, **characterized in that** the optical fiber cable (46) extends along the wall of the tube (44) and the image transmission means (50) occupy substantially the remainder of the tube.

11. Apparatus according to any one of preceding claims, **characterized in that** the pipes housed inside the rod (16) around the first endoscope (22) comprise an air pipe (26), a powder pipe (24), and a liquid pipe (28), extending from one end to the other of said rod and each having a first end for connection to feed means (40), the powder and liquid pipes (24, 28) having respective opposite ends that open to the outside of the rod (16) in the same direction as the illuminating means and the image transmission means, and the air pipe (26) having an opposite end opening out axially at the end of the rod (16) to generate a flow of air for protecting the end of the first endoscope (22).

12. Apparatus according to any one of preceding claims, **characterized in that** the tube (44) of the first endoscope (22) has a diameter of about 4 mm, and the above-mentioned rod (16) has a diameter of about 8 mm.

13. Apparatus according to any one of preceding claims, **characterized in that** the ultraviolet light, second endoscope (60) has an outside diameter that is substantially equal to that of the above-mentioned rod (16).

## Patentansprüche

1. Vorrichtung zum Suchen und Erkennen von Fehlern in Bauteilen durch Eindringprüfung und Endoskopie, wobei diese Vorrichtung einen starren, röhrenförmigen, zylindrischen Stab (16) mit geringem Durchmesser, in dem Stab (16) aufgenommene Leitungen (24, 28) für die Zuführung von Luft und Eindringprüfungsprodukten zu einem zu untersuchenden Bauteil-Bereichs (12) sowie Mittel zur Lichtführung und zur Übertragung von Bildern, die in dem Stab (16) zur Beleuchtung und zur Beobachtung des zu untersuchenden Bauteil-Bereichs aufgenommen sind,
**dadurch gekennzeichnet,**
**dass** die Mittel zur Lichtführung und zur Übertragung von Bildern von einem ersten Endoskop (22) mit sichtbarem Licht gebildet werden, das axial in dem Stab (16) eingebaut und von den Leitungen (24, 26, 28) für die Eindringprüfungsprodukte und für die Luft umgeben ist, wobei dieses Endoskop (22) ein gerades Rohr (44) umfasst, in dem Mittel (46) zur Führung von sichtbarem Licht und Mittel (50) zur Übertragung von Bildern parallel zueinander verlaufend eingebaut sind, und dass die Vorrichtung ein zweites Endoskop (60) mit ultraviolettem Licht umfasst, das unabhängig von dem ersten Endoskop und von dem oben genannten Stab (16) zur Beobachtung der mit den Mitteln zur Eindringprüfung bearbeiteten Bauteil-Bereiche vorgesehen ist.

2. Vorrichtung nach Anspruch 1,
**dadurch gekennzeichnet,**
**dass** die Mittel zur Lichtführung des ersten Endoskops ein Lichtleitfaserkabel umfassen, das sich von einem Ende des Rohrs (44) bis zum anderen erstreckt.

3. Vorrichtung nach Anspruch 2,
**dadurch gekennzeichnet,**
**dass** das Lichtleitfaserkabel (46) ein umgebogenes Austrittsende (48) aufweist, das schräg zur Achse des Rohrs gerichtet ist und dazu bestimmt ist, in die Nähe eines Bauteil-Bereichs (12) geführt zu werden, der mit sichtbarem Licht beleuchtet werden soll.

4. Vorrichtung nach einem der Ansprüche 1 bis 3,
**dadurch gekennzeichnet,**
**dass** die Mittel zur Übertragung von Bildern aus einer geradlinigen Gesamtanordnung von optischen Komponenten bestehen, die ein Objektiv (52) zum Aufbau eines Bildes sowie Linsen (54) zur Bildübertragung umfassen und sich im Wesentlichen von einem Ende des Rohrs (44) bis zum anderen erstrecken.

5. Vorrichtung nach einem der Ansprüche 1 bis 4,
**dadurch gekennzeichnet,**
**dass** die Mittel zur Übertragung von Bildern des ersten Endoskops auch optische Umlenkmittel (56) umfassen, die am Ende des Rohrs (44) auf der optischen Achse der Mittel (50) zur Übertragung von Bildern angebracht sind und schräg zu dieser optischen Achse ausgerichtet sind.

6. Vorrichtung nach den Ansprüchen 3 und 5,
**dadurch gekennzeichnet,**
**dass** die optischen Umlenkmittel (56) und das umgebogene Austrittsende des Lichtleitfaserkabels (46) benachbart und dergestalt ausgerichtet sind, dass sie jeweils einen gleichen Bauteil-Bereich betrachten.

7. Vorrichtung nach Anspruch 6,
**dadurch gekennzeichnet,**
**dass** die optischen Umlenkmittel (56) sich zwischen dem Ende der geradlinigen Gesamtanordnung von optischen Komponenten und dem umgebogenen Austrittsende (48) des Lichtleitfaserkabels (46) befinden.

8. Vorrichtung nach einem der Ansprüche 5 bis 7,
**dadurch gekennzeichnet,**
**dass** die optischen Umlenkmittel (56) von einem Prisma gebildet werden.

9. Vorrichtung nach einem der Ansprüche 5 bis 8,
**dadurch gekennzeichnet,**
**dass** die optischen Umlenkmittel (56) eine reflektierende Oberfläche aufweisen, die im 45°-Winkel zur optischen Achse der Mittel (50) zur Übertragung von Bildern ausgerichtet ist, und sich das umgebogene Austrittsende (48) des Lichtleitfaserkabels (46) im rechten Winkel zur Achse des Rohrs (44) erstreckt.

10. Vorrichtung nach einem der Ansprüche 2 bis 9,
**dadurch gekennzeichnet,**
**dass** das Lichtleitfaserkabel (46) sich an der Wand des Rohrs (44) entlang erstreckt und die Mittel (50) zur Übertragung von Bildern im Wesentlichen den Rest des Rohrs einnehmen.

11. Vorrichtung nach einem der vorherigen Ansprüche,
**dadurch gekennzeichnet,**
**dass** die Leitungen, die in dem Stab (16) um das erste Endoskop (22) herum aufgenommen sind, eine Leitung für Luft (26), eine Leitung für Pulver (24) und eine Leitung für Flüssigkeit (28) umfassen, die sich von einem Ende dieses Rohrs zum anderen erstrecken und ein erstes Ende aufweisen, das dazu bestimmt ist, mit Versorgungsmitteln (40) verbunden zu werden, wobei die Leitungen (24, 28) für Pulver und für Flüssigkeit mit ihrem anderen Ende außerhalb des Stabs (16) in der gleichen Richtung wie die Beleuchtungsmittel und die Mittel zur Übertragung von Bildern münden, und wobei die Leitung für Luft (26) mit ihrem anderen Ende axial am Ende des Stabs (16) mündet, um eine Luftzirkulation zu erzeugen, die das Ende des ersten Endoskops (22) schützt.

12. Vorrichtung nach einem der vorherigen Ansprüche,
**dadurch gekennzeichnet,**
**dass** das Rohr (44) des ersten Endoskops (22) einen Durchmesser in der Größenordnung von 4 Millimetern hat, und der oben genannte Stab (16) einen Durchmesser in der Größenordnung von 8 Millimetern hat.

13. Vorrichtung nach einem der vorherigen Ansprüche,
**dadurch gekennzeichnet,**
**dass** das zweite Endoskop (60) mit ultraviolettem Licht einen Außendurchmesser aufweist, der im Wesentlichen gleich dem des oben genannten Stabs (16) ist.
